# EUROPÄISCHE PATENTANMELDUNG

(11) **EP 1 018 394 A2**
(43) Veröffentlichungstag der Anmeldung: **12.07.2000**
(21) Anmeldenummer: 99125244.6
(22) Anmeldetag: 17.12.1999
(51) Int. Cl.: B23K 26/14

(54) **Prozessgaszufuhr beim Laserschweissen**

(30) Priorität: 18.12.1998 DE 19858680
(71) Anmelder: Linde Technische Gase GmbH, 82049 Höllriegelskreuth (DE)
(72) Erfinder: Herrmann, Johann, 85716 Unterschleissheim (DE)
(74) Vertreter: Obermüller, Bernhard

(57) **Zusammenfassung**

Die Erfindung betrifft ein Verfahren und eine Vorrichtung zum Laserschweißen, wobei ein fokussierter Laserstrahl auf die zu bearbeitende Werkstückoberfläche geführt wird und ein Prozeßgasstrom (6) über eine zum Laserstrahl nicht koaxial angeordnete Prozeßgasdüse (1) gegen die Werkstückoberfläche geleitet wird. Erfindungsgemäß umfaßt der Düsenkanal (2) der Prozeßgasdüse einen Bereich (3) mit einer Verengung des Düsenkanalquerschnitts in Strömungsrichtung und einen Bereich (4) mit einer Erweiterung des Düsenkanalquerschnitts in Strömungsrichtung. Der Düsenkanal im vom Gas zuletzt durchströmten Kanalstück weist einen sich ändernden Querschnitt auf. Der Düsenkanal kann einen lavalförmig ausgebildeten Bereich (3, 4) umfassen.

## Beschreibung

Die Erfindung betrifft ein Verfahren zum Laserschweißen, wobei ein fokussierter Laserstrahl auf die zu bearbeitende Werkstückoberfläche geführt wird und ein Prozeßgasstrom über eine zum Laserstrahl nicht koaxial angeordnete Düse gegen die Werkstückoberfläche geleitet wird. Die Erfindung betrifft ferner eine Vorrichtung zum Laserschweißen umfassend Mittel zum Zuführen eines fokussierten Laserstrahls auf eine zu bearbeitende Werkstückoberfläche und eine nicht koaxial angeordnete Düse zur Zufuhr eines Prozeßgasstromes gegen die Werkstückoberfläche.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Beim Laserschweißen werden vielfach zylinderförmige Röhrchen eingesetzt, um das Prozeßgas dem Schweißprozeß zuzuführen. Dies ist beispielsweise aus der Veröffentlichung "Laser im Nebel", Dr. W. Danzer und Klaus Behler, Zeitschrift LASER, Ausgabe 1/87, Seiten 32 bis 36, bekannt.

In der Regel werden zur Prozeßgaszufuhr Röhrchen aus Kupfer oder Edelstahl verwendet. Typische Röhrchen weisen einen Durchmesser zwischen 2 mm und 10 mm bei einer Wandstärke von etwa 1 mm auf. Üblicherweise liegen die Abstände vom Schweißprozeß zwischen 2 und 10 mm.

Die genannten Düsen besitzen keinen Düsenkanal mit einer speziellen Form. Es handelt sich lediglich um Abschnitte von Zylinderröhrchen. Das hat zur Folge, daß die Rohrenden möglichst dicht an den Schweißprozeß herangebracht werden müssen, um die mit dem Düsenrohr erzeugte Strömung des Prozeßgases effektiv nutzen zu können. Je näher die Düsen aber am Schweißprozeß sind, desto stärker ist die Gefahr von Beschädigungen und Verschmutzungen der Düsenröhrchen. Beschädigte Düsen haben in der Regel einen negativen Einfluß auf das Schweißergebnis. Sie müssen daher gereinigt oder sogar ausgetauscht werden. Das führt zu Standzeiten der Laserschweißanlagen.

Der Erfindung lag daher die Aufgabe zugrunde, ein Verfahren und eine Vorrichtung der eingangs genannten Art aufzuzeigen, welche eine verbesserte Prozeßgaszufuhr ermöglichen. Insbesondere sollte ein größerer Abstand vom Schweißprozeß bei guten Schweißergebnissen ermöglicht werden, um die Gefahr von Beschädigung und/oder Verschmutzung der Prozeßgasdüse zu minimieren.

Diese Aufgabe wird dadurch gelöst, daß eine Düse eingesetzt wird, deren Düsenkanal einen Bereich mit einer Verengung des Düsenkanalquerschnitts in Strömungsrichtung und einen Bereich mit einer Erweiterung des Düsenkanalquerschnitts in Strömungsrichtung umfaßt.

Als alternative Lösung der Aufgabe oder als ergänzende Ausgestaltung der Erfindung wird vorgeschlagen, daß der Düsenkanal der Prozeßgasdüse im vom Gas zuletzt durchströmten Kanalstück (dem Werkstück zugewandt) einen sich ändernden Querschnitt aufweist.

Die Erfindung basiert auf der Idee, einen Düsenkanal mit verbesserter Richtcharakteristik für die Prozeßgasströmung aufzuzeigen. Dadurch können die Prozeßgasdüsen weiter entfernt vom Schweißprozeß positioniert werden. Als Folge sinkt die Gefahr von Verschmutzung und Beschädigung der Düsen. Außerdem sind die Möglichkeiten der Strömungsgestaltung entsprechend höher.

In Ausgestaltung der Erfindung umfaßt der Düsenkanal der Prozeßgasdüse einen lavalförmig ausgebildeten Bereich.

Mit Vorteil umfaßt der Düsenkanal einen im wesentlichen zylinderförmig ausgestalteten Bereich. Dieser ist in der Regel auf der vom Werkstück abgewandten Seite der Düse angeordnet.

Weitere Vorteile lassen sich dadurch erzielen, daß der im wesentlichen zylinderförmig ausgestaltete Bereich des Düsenkanals länger ist als das Kanalstück mit sich ändemdem Querschnitt bzw. länger als der lavalförmig ausgebildete Bereich der Düse.

Die Erfindung birgt als Vorteile eine geringere Anfälligkeit für Beschädigungen und Verschmutzungen, höhere Standzeiten der Düsen, geringere Betriebskosten und einen effektiveren Gaseinsatz.

Im folgenden soll die Erfindung anhand eines schematisch dargestellten Ausführungsbeispieles näher erläutert werden.

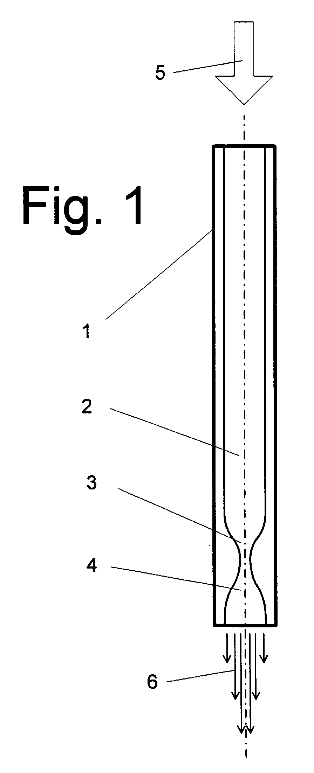

Hierbei zeigt
- Figur 1: eine Prozeßgasdüse gemäß der Erfindung.

Die in Figur 1 dargestellte Prozeßgasdüse 1 weist einen Düsenkanal 2 auf. Das zugeführte Prozeßgas 5 durchströmt in der Düse 1 zunächst einen zylinderförmig ausgebildeten Bereich. In Strömungsrichtung folgt dann ein Bereich 3 mit einer Verengung des Düsenkanalquerschnitts und schließlich ein Bereich 4 mit einer Erweiterung des Düsenkanalquerschnitts.

Mit der gezeigten Prozeßgasdüse 1 kann ein Prozeßgasstrom 6 mit starker Richtcharakteristik erzeugt werden. Im Vergleich zum Strömungsbild eines Zylinderröhrchens ist die Prozeßgasströmung wesentlich gebündelter und besitzt quasi ausschließlich in Richtung der Düsenachse verlaufende Geschwindigkeitskomponeten (Radialkomponenten werden durch die Form des Düsenkanals unterbunden).

## Patentansprüche

1. Verfahren zum Laserschweißen, wobei ein fokussierter Laserstrahl auf die zu bearbeitende Werkstückoberfläche geführt wird und ein Prozeßgasstrom (6) über eine zum Laserstrahl nicht koaxial angeordnete Düse (1) gegen die Werkstückoberfläche geleitet wird, **dadurch gekennzeichnet**, daß eine Düse (1) eingesetzt wird, deren Düsenkanal (2) einen Bereich (3) mit einer Verengung des Düsenkanalquerschnitts in Strömungsrichtung und einen Bereich (4) mit einer Erweiterung des Düsenkanalquerschnitts in Strömungsrichtung umfaßt.

2. Verfahren zum Laserschweißen, wobei ein fokussierter Laserstrahl auf die zu bearbeitende Werkstückoberfläche geführt wird und ein Prozeßgasstrom (6) über eine zum Laserstrahl nicht koaxial angeordnete Düse (1) gegen die Werkstückoberfläche geleitet wird, insbesondere nach Anspruch 1, **dadurch gekennzeichnet**, daß eine Düse (1) eingesetzt wird, deren Düsenkanal (2) im vom Gas (5) zuletzt durchströmten Kanalstück (dem Werkstück zugewandt) einen sich ändernden Querschnitt (3, 4) aufweist.

3. Verfahren nach Anspruch 1 oder 2, dadurch gekennzeichnet, daß eine Düse (1) eingesetzt wird, deren Düsenkanal (2) einen lavalförmig ausgebildeten Bereich (3, 4) umfaßt.

4. Verfahren nach einem der Ansprüche 1 bis 3, dadurch gekennzeichnet, daß eine Düse (1) eingesetzt wird, deren Düsenkanal (2) einen im wesentlichen zylinderförmig ausgestalteten Bereich umfaßt.

5. Verfahren nach Anspruch 4, dadurch gekennzeichnet, daß eine Düse (1) eingesetzt wird, wobei der im wesentlichen zylinderförmig ausgestaltete Bereich des Düsenkanals (2) länger ist als das Kanalstück mit sich änderndem Querschnitt bzw. der lavalförmig ausgebildete Bereich (3, 4).

6. Vorrichtung zum Laserschweißen umfassend Mittel zum Führen eines fokussierten Laserstrahls auf eine zu bearbeitende Werkstückoberfläche und eine nicht koaxial angeordnete Düse (1) zur Zufuhr eines Prozeßgasstromes (6) gegen die Werkstückoberfläche, **dadurch gekennzeichnet**, daß der Düsenkanal (2) der Düse (1) einen Bereich (3) mit einer Verengung des Düsenkanalquerschnitts in Strömungsrichtung und einen Bereich (4) mit einer Erweiterung des Düsenkanalquerschnitts in Strömungsrichtung umfaßt.

7. Vorrichtung zum Laserschweißen umfassend Mittel zum Führen eines fokussierten Laserstrahls auf eine zu bearbeitende Werkstückoberfläche und eine nicht koaxial angeordnete Düse (1) zur Zufuhr eines Prozeßgasstromes (6) gegen die Werkstückoberfläche, insbesondere nach Anspruch 6, **dadurch gekennzeichnet**, daß der Düsenkanal (2) der Düse (1) im vom Gas (5) zuletzt durchströmten Kanalstück (dem Werkstück zugewandt) einen sich ändernden Querschnitt (3, 4) aufweist.

8. Vorrichtung nach Anspruch 6 oder 7, dadurch gekennzeichnet, daß der Düsenkanal (2) der Düse (1) einen lavalförmig ausgebildeten Bereich (3, 4) umfaßt.

9. Vorrichtung nach einem der Ansprüche 6 bis 8, dadurch gekennzeichnet, daß der Düsenkanal (2) der Düse (1) einen im wesentlichen zylinderförmig ausgestalteten Bereich umfaßt.

10. Vorrichtung nach Anspruch 9, dadurch gekennzeichnet, daß der im wesentlichen zylinderförmig ausgestaltete Bereich des Düsenkanals (2) länger ist als das Kanalstück mit sich änderndem Querschnitt bzw. der lavalförmig ausgebildete Bereich (3, 4).
